# EUROPÄISCHE PATENTSCHRIFT

(11) **EP 3 099 525 B1**
(45) Veröffentlichungstag und Bekanntmachung des Hinweises auf die Patenterteilung: **21.03.2018**
(21) Anmeldenummer: 15701356.6
(22) Anmeldetag: 27.01.2015
(51) Int. Cl.: B60N 2/06, F16H 57/039

(54) **GETRIEBEGEHÄUSE FÜR EIN VERSTELLGETRIEBE EINES FAHRZEUGSITZES**
GEARBOX FOR AN ADJUSTER GEAR OF A VEHICLE SEAT
BOITE DE TRANSMISSION POUR LE RÉGLAGE D'UN SIÈGE DE VÉHICULE

(30) Priorität: 31.01.2014 DE 102014201813; 10.03.2014 DE 102014204301
(43) Veröffentlichungstag der Anmeldung: 07.12.2016
(73) Patentinhaber: Adient Luxembourg Holding S.à r.l., 1855 Luxembourg (LU)
(72) Erfinder: HOFFMANN, Andreas, 42489 Wülfrath (DE)
(74) Vertreter: Liedhegener, Ralf
(86) Internationale Anmeldenummer: PCT/EP2015/051564
(87) Internationale Veröffentlichungsnummer: WO 2015/113953

(56) Entgegenhaltungen:
- DE-A1-102006 035 437
- DE-A1-102008 046 274
- FR-A1- 2 928 880

## Beschreibung

Die Erfindung betrifft ein Getriebegehäuse für ein Verstellgetriebe eines Fahrzeugsitzes, mit einem ersten Gehäuseteil und einem zweiten Gehäuseteil.

### Stand der Technik

Aus der WO 2005/053997 A1 ist ein Getriebegehäuse für ein Sitzverstellgetriebe mit einem ersten Gehäuseteil und einem zweiten Gehäuseteil bekannt, bei dem die beiden Gehäuseteil mittels einer Schraubverbindung in ihrer Lage zueinander fixiert sind.

Die DE 10 2008 046 274 A1 beschreibt einen Schraubeneinstellmechanismus, mit einem eine auf einer Schraube aufgeschraubten Mutter umschließenden Gehäuse, welches aus zwei Gehäuseteilen besteht, welche von jeweils einer Seite der Mutter in Längsrichtung der Schraube zusammenfügbar sind und mittels einem elastischen Kopplungselement verbunden und zusammengebaut gehalten sind. Hierbei übt das Kopplungselement auf die Gehäuseteile eine die Gehäuseteile in der Längsrichtung der Schraube hin zur Mutter elastische Vorspannung aus.

Die EP 1 026 027 A2 offenbart ein eine erste Halbschale und eine zweite Halbschale umfassendes Getriebegehäuse für ein Sitzverstellgetriebe. An der ersten Halbschale sind Zapfen angeformt, die in komplementäre Öffnungen in der zweiten Halbschale eingesteckt sind. In Richtung der Zapfen sind die beiden Halbschalen durch eine U-förmige Schalenaufnahme zueinander gesichert, deren beiden Enden gabelförmig in der Art eines offenen Schlüssellochs ausgebildet sind. Jedes der gabelförmigen Enden umschließt jeweils einen aus der ersten Halbschale und der zweiten Halbschale gebildeten halbkreisförmigen Ansatz und fixiert dadurch die beiden Halbschalen in Richtung der Zapfen zueinander. Zum Einsetzen des Getriebegehäuses in die Schalenaufnahme muss das Getriebegehäuse zunächst um 90° zu seiner endgültigen Einbaulage verdreht in die Schalenaufnahme eingesteckt und anschließend in seine endgültige Einbaulage gedreht werden. Dies ist notwendig, damit die beiden halbkreisförmigen Ansätze die Engstellen in den schlüssellochförmigen Enden der Schalenaufnahme passieren können. In der endgültigen Einbaulage ist das Getriebegehäuse dann formschlüssig in der Schalenaufnahme gesichert.

Darüber hinaus sind aus der DE 10 2006 035 437 A1 und der FR 2 928 880 A1 Sitzgleitvorrichtungen bekannt, welche ein Getriebegehäuse mit einem ersten Gehäuseteil und einem zweiten Gehäuseteil aufweisen, wobei ein erstes Zylindersegment des ersten Gehäuseteils und ein zweites Zylindersegment des zweiten Gehäuseteils gemeinsam einen Zylinderabschnitt bilden, durch den eine Spindel hindurchführbar ist.

### Aufgabe

Der Erfindung liegt die Aufgabe zu Grunde, ein Getriebegehäuse der eingangs genannten Art zu verbessern, insbesondere die Montagekosten zu reduzieren. Auf ein Drehen des Getriebegehäuses innerhalb einer das Getriebegehäuse lagernden Aufnahme während des Montageprozesses soll verzichtet werden können.

### Lösung

Diese Aufgabe wird erfindungsgemäß durch ein Getriebegehäuse für ein Verstellgetriebe eines Fahrzeugsitzes mit einem ersten Gehäuseteil und einem zweiten Gehäuseteil gelöst, wobei ein erstes Zylindersegment des ersten Gehäuseteils und ein zweites Zylindersegment des zweiten Gehäuseteils paarweise aneinander anliegend einen Zylinderabschnitt bilden, durch den eine sich in Richtung einer Achse erstreckende Spindel hindurchführbar ist, wobei die beiden Gehäuseteile mittels zweier Federklammern in radial zu der Achse, voneinander weg orientierter Richtung zueinander fixiert sind, und mindestens eine der zwei Federklammern zwei Federschenkel aufweist, die mittels eines Stegs miteinander verbunden sind, wobei die beiden Federschenkel einen Nockenbereich zwischen sich aufnehmen und der Nockenbereich eine Verdrehung der Federklammer um die Achse verhindert.

Dadurch, dass die beiden Gehäuseteile mittels zweier Federklammern in radial zu der Achse, voneinander weg orientierter Richtung zueinander fixiert sind, wird eine Reduzierung der Herstellkosten durch eine Vereinfachung der Einzelteile sowie der Fertigungsprozesse erreicht. Zudem ist gegenüber geschraubten Getriebegehäusen eine Reduzierung der Bauteilgröße durch eine Bauraumoptimierung der Verbindungselemente möglich. Auf ein Drehen des Getriebegehäuses innerhalb einer das Getriebegehäuse lagernden Aufnahme während des Montageprozesses kann verzichtet werden, da die beiden Gehäuseteile bereits durch die Federklammer zueinander gesichert sind.

Dadurch, dass mindestens eine der zwei Federklammern zwei Federschenkel aufweist, die mittels eines Stegs miteinander verbunden sind, wobei die beiden Federschenkel einen Nockenbereich zwischen sich aufnehmen und der Nockenbereich eine Verdrehung der Federklammer um die Achse verhindert, kann eine geeignete Federkennlinie erreicht werden sowie eine Verdrehung der Federklammer verhindert werden.

Die Federklammer fixiert die beiden Gehäuseteile in mindestens einer Raumrichtung zueinander. Die Fixierung in den übrigen Raumrichtungen erfolgt vorzugsweise mittels gestufter Anlageflächen der Gehäuseteile, die aneinander anliegen. Vorzugsweise sind die Anlageflächen derart gestuft ausgebildet, dass die beiden Gehäuseteile bereits aufgrund der gestuften Anlageflächen in nur einer Raumrichtung zueinander beweglich sind. Die mindestens eine Federklammer sichert dann die beiden Gehäuseteile in dieser einen Raumrichtung. Gestufte Anlageflächen sind beispielsweise aus der WO 2005/053997 A1 bekannt.

Die Erfindung ist nicht darauf beschränkt, dass das Getriebegehäuse aus genau zwei Gehäuseteilen besteht. Neben dem ersten Gehäuseteil und dem zweiten

Gehäuseteil kann das Getriebegehäuse noch ein oder mehrere weitere Gehäuseteile aufweisen.

Das Getriebegehäuse kann einen Aufnahmeraum für eine um eine Achse drehbare Spindelmutter und eine die Spindelmutter antreibende Schnecke bilden. Die Drehung der Spindelmutter bewirkt eine Relativverschiebung des Getriebegehäuses relativ zu einer mit der Spindelmutter zusammenwirkenden Spindel, die sich in Richtung der Achse erstreckt. Solche Spindel-Mutter-Getriebe können beispielsweise in Sitzverstellgetrieben von Sitzlängseinstellern zum Einsatz kommen.

In einer bevorzugten Ausführung weist die Federklammer eine flache, U-förmige Grundform auf. Eine solche Form lässt sich einfach stanzen oder biegen. Die Federklammer kann jedoch auch eine leicht gewölbte Form, insbesondere eine Wellenform aufweisen, so dass an Kontaktpunkten zwischen der Federklammer und dem Getriebegehäuse gezielt die Richtung der resultierenden Kontaktkräfte beeinflusst werden kann. So lassen sich beispielsweise resultierende Kräfte erzeugen, die eine Kraftkomponente aufweisen, die die Federklammer immer in Fügerichtung der Federklammer beaufschlagen.

Ferner kann der Steg jeweils ein Ende der beiden Federschenkel miteinander verbinden oder zwischen den Enden der beiden Federschenkel angeordnet sein.

Die beiden Federschenkel können spiegelsymmetrisch zueinander ausgebildet sein. Dadurch ergibt sich eine symmetrische Kraftverteilung der Federabstützung an dem Getriebegehäuse.

Vorzugsweise ist die Federklammer aus einem Federblech ausgestanzt. Die Federklammer kann jedoch auch aus einem Federdraht gebogen sein.

In einer bevorzugten Ausführungsform umgreift die Federklammer einen Absatz des Getriebegehäuses, wobei der Absatz aus mindestens zwei Segmenten zusammengesetzt ist, und jedes der beiden Segmente an einem anderen der beiden Gehäuseteile angeformt ist. Der Absatz kann ein Zylinderabschnitt, bestehend aus einem ersten Zylindersegment des ersten Gehäuseteils und einem zweiten Zylindersegment des zweiten Gehäuseteils sein, die aneinander anliegen und sich komplementär zu dem Zylinderabschnitt ergänzen. Der Zylinderabschnitt ist vorzugsweise ein Hohlzylinderabschnitt. Der Zylinderabschnitt ist vorzugsweise ein Hohlzylinderabschnitt, durch die eine mit der Spindelmutter zusammenwirkende Spindel hindurch verläuft. Dabei können die Mittelachsen des Hohlzylinders und der Spindel miteinander fluchten. Vorzugsweise weist das Getriebegehäuse genau zwei Absätze auf, von denen jeder Absatz mit genau einer Federklammer zusammen wirkt.

Die Federklammer wird während der Montage des Getriebes vorzugsweise auf den Absatz des Getriebegehäuses aufgeschoben, insbesondere auf einen als Zylinderabschnitt ausgebildeten Absatz, der aus zwei Zylindersegmenten zusammengesetzt ist, von denen jedes an einem anderen der beiden Gehäuseteile angeformt ist. Während des Aufschiebens der Federklammer federn die beiden Federschenkel leicht auf, indem ein Konturabschnitt eines jeden Federschenkels entlang des Absatzes verläuft, insbesondere entlang eines Bodens einer Vertiefung in dem Absatz. Nach Erreichen der endgültigen Relativposition zu dem Getriebegehäuse federn die Federschenkel vorzugsweise wieder leicht zusammen, wobei einzelne Konturen der Federarme mit Konturen des Absatzes kraftschlüssig und/oder formschlüssig zusammenwirken. Mindestens einer der beiden Federschenkel kann an einem von dem Steg abgewandten Ende eine Nase aufweisen, die die Federklammer entgegen einer Fügerichtung der Federklammer fixiert. Die Federklammer kann so ohne zusätzliche Sicherungsmittel gegen Verlust gesichert werden.

Eine Sicherung der Federklammer in axialer Richtung kann erzielt werden, indem mindestens ein Federschenkel in eine Vertiefung eines Absatzes eingreift. Dadurch liegt dieser Federschenkel zwischen zwei seitlichen Begrenzungsflächen der Vertiefung. Die Vertiefung verläuft vorzugsweise in tangentialer Richtung. Die beiden Federschenkel nehmen den Nockenbereich des Getriebegehäuses derart zwischen sich auf, dass der Nockenbereich eine Verdrehung der Federklammer, insbesondere um einen als Zylinderabschnitt ausgebildeten Absatz, verhindert. Der Nocken kann in radialer Richtung von dem Absatz abstehen. Der Nocken kann eine quaderförmige Gestalt haben und formschlüssig zwischen zwei Federschenkel greifen. Der Nocken kann alternativ oder zusätzlich als Anschlag in Fügerichtung zwischen Federklammer und Getriebegehäuse dienen, insbesondere indem ein radial äußerer Bereich des Nockens an dem Steg der Federklammer anliegt.

Gegenüber einer Verbindung der Gehäusehälften mittels Schrauben oder durch Nietverbindungen, wird bei der erfindungsgemäßen Verbindung mit als Federklammern ausgebildeten Clipselementen der Bauraum für die Verschraubung oder Vernietung eingespart. Die Gehäuseteile werden dadurch kleiner und kostengünstiger. Weiterhin wird der aufwändige Verschraubungsprozess durch einen einfacheren Aufschiebeprozess der Clipselemente ersetzt. Hierdurch kann Taktzeit eingespart werden, sowie mit einfacheren Betriebsmitteln gearbeitet werden. Eine Mehrfachschraubstation muss nicht vorgesehen sein.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine Explosionsdarstellung eines Sitzverstellgetriebes gemäß dem Stand der Technik,
- Fig. 2:: eine perspektivische Ansicht eines erfindungsgemäßen Getriebegehäuses,
- Fig. 3:: eine Fig. 2 entsprechende Ansicht des Getriebegehäuses vor der Montage von Federklammern und

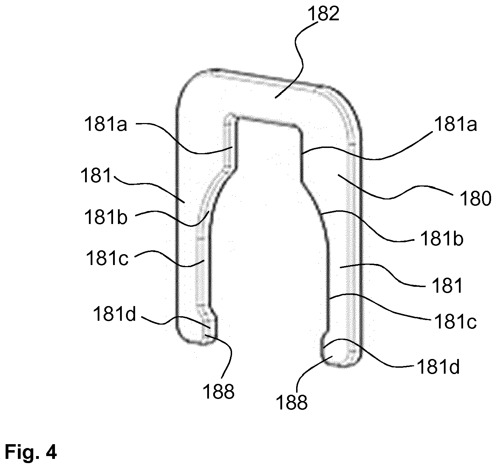

- Fig. 4:: eine Einzelansicht einer Federklammer aus Fig. 3.

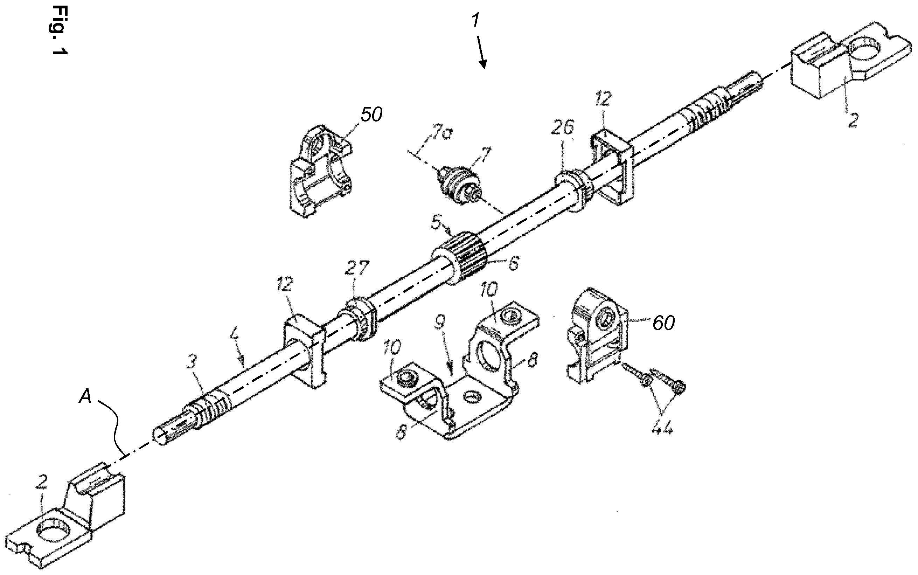

Figur 1 zeigt ein aus dem Stand der Technik bekanntes Getriebe 1 zur Sitzlängsverstellung eines Kraftfahrzeugsitzes. Es befindet sich vorzugsweise zwischen einer Unter- und einer Oberschiene und ist Bestandteil eines an sich bekannten Längsverstellers, dessen grundsätzlicher Aufbau beispielsweise aus der DE 10 2004 001 624 B3 bekannt ist. Hierbei ist die Unterschiene an einer bodenseitigen Struktur eines Kraftfahrzeuges fixiert, während die Oberschiene am Sitz angeordnet und mit diesem relativ zur Unterschiene längsverstellbar ist. Die beiden Schienen können über eine Gleitlagerung oder durch Wälzkörper aneinander gelagert sein. Dieser prinzipielle Aufbau eines Längsverstellers ist an sich vorbekannt und in der Figur 1 nicht näher dargestellt.

Zwei endseitige Spindelhalter 2 sind an der Unterschiene befestigt. Eine mit einem Gewinde 3 versehene Spindel 4 ist in den beiden Spindelhaltern 2 rotationsfest gelagert. Das Gewinde 3 ist in Figur 1 der Einfachheit halber nicht vollständig dargestellt. Die Mittelachse der Spindel 4 in Richtung ihrer Längserstreckung ist nachfolgend als Achse A bezeichnet. In einem in ein Kraftfahrzeug eingebauten Zustand verläuft die Achse A weitgehend parallel zur Fahrtrichtung. Die Achse A definiert die nachfolgend verwendeten Richtungsangaben eines Zylinderkoord inatensystems.

Auf der Spindel 4 ist eine Spindelmutter 5 aufgeschraubt. Die Spindelmutter 5 weist auf ihrer Mantelfläche eine Schrägverzahnung 6 auf, die mit einer Schnecke 7 in Zahneingriff ist. Die Achse A der Spindel 4 und eine Rotationsachse 7a der Schnecke 7 verlaufen hierbei senkrecht zueinander. Die Schnecke 7 wird von einem nicht näher dargestellten elektrischen Antriebsmotor angetrieben. Anstelle eines Antriebsmotors könnte auch eine manuelle Betätigung vorgesehen sein. Die Spindel 4 ist durch zwei zueinander parallele Schenkel 8 eines im Wesentlichen U-förmigen Haltebügels 9 hindurch gesteckt. An jeden der Schenkel 8 schließt sich ein Befestigungsschenkel 10 an, mittels dem der Haltebügel 9 an der Oberschiene angebracht ist. Die Befestigungsschenkel 10 sind gegenüber ihrem jeweiligen Schenkel 8 um etwa 90° abgebogen.

In dem U-förmigen Haltebügel 9 ist ein Getriebegehäuse aufgenommen, das von zwei Dämpfern 12 eingefasst wird. Hierbei befindet sich jeweils einer der Dämpfer 12 zwischen dem Getriebegehäuse und einem der Schenkel 8. Durch die Dämpfer 12 wird die Übertragung von möglichen Schwingungen des Verstellgetriebes 1 auf die Oberschiene verhindert und damit auch eine störende Geräuschentwicklung unterdrückt.

Das Getriebegehäuse besteht aus zwei schalenförmigen Gehäuseteilen 50, 60, nämlich einem ersten Gehäuseteil 50 und einem zweiten Gehäuseteil 60. Die Längsachse der Spindel 4 liegt annähernd in einer gestuften Trennfläche des Gehäuses, an der die beiden Gehäuseteile 50, 60 mit jeweils einer Anlagefläche aneinander stoßen. Zudem verläuft die Rotationsachse 7a der Schnecke 7 senkrecht zur Trennfläche. Die beiden Gehäuseteile 50, 60 bilden zwischen sich einen Aufnahmeraum aus, in dem ein Abschnitt der Spindel 4, die Spindelmutter 5, die Schnecke 7 sowie zwei Lagerbuchsen 26, 27 angeordnet sind. Da der Aufnahmeraum eine geringere Breite hat als der Durchmesser der Spindelmutter 5, hat jedes der Gehäuseteile 50, 60 im Bereich seiner Seitenwände einen Durchbruch Die Gehäuseteile 50, 60 weisen zudem im Bereich der Trennfläche jeweils zwei sich gegenüberliegende halbkreisförmige Einschnitte auf, die jeweils paarweise eine Ausnehmung bilden, durch die die Spindel 4 hindurchgeführt ist. In jeder der Ausnehmungen ist eine Lagerbuchse 26, 27 angeordnet, in der die Spindelmutter 5 gelagert ist.

In oberen, halbkreisförmigen Fortsätzen der Gehäuseteile 50, 60 ist ebenfalls jeweils eine Ausnehmung vorhanden. Diese Ausnehmungen dienen zur Aufnahme der Schnecke 7, die mittels Lagerbuchsen in den Gehäuseteilen 50, 60 gelagert sein kann. Die Gehäuseteile 50, 60 werden im montierten Zustand im Bereich der Trennfläche mit ihren gestuften Anlageflächen aneinander gedrückt.

Die Anlageflächen sind weitgehend eben mit einzelnen Stufen und bilden dadurch eine Art Verschachtelung aus Vorsprüngen und Hinterschneidungen. Durch die Verschachtelung ist die relative Lage der beiden Gehäuseteile 50, 60 zueinander in Bezug auf ihre gegenseitige Ausrichtung vorbestimmt.

Um die beiden Gehäuseteile 50, 60 miteinander zu verbinden, sind zwei Schrauben 44 vorgesehen, die sich in Bezug auf den Aufnahmeraum diagonal gegenüber liegen. In anderen Ausführungsformen des Standes der Technik sind nur eine einzige oder auch drei oder mehr Schraubverbindungen vorhanden.

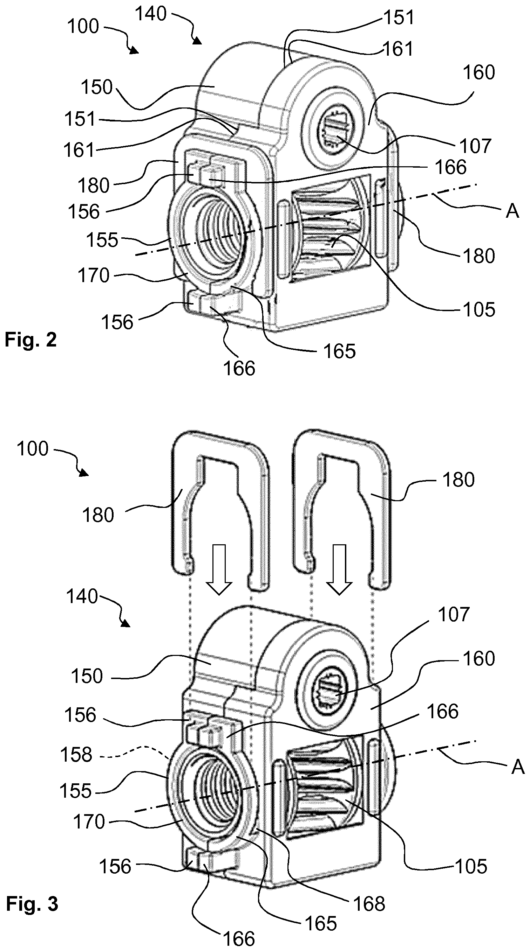

In den Figuren 2 und 3 ist ein erfindungsgemäßes Getriebegehäuse 140 eines Sitzverstellgetriebes für ein Kraftfahrzeug dargestellt, das von seinem Grundaufbau, soweit nicht abweichend beschrieben, dem in Figur 1 dargestellten und zuvor beschriebenen Getriebegehäuse entspricht und Bestandteil eines Verstellgetriebes 100, beispielsweise zur Sitzlängsverstellung eines Kraftfahrzeugsitzes, ist.

Das Getriebegehäuse 140 umfasst ein erstes Gehäuseteil 150 und ein zweites Gehäuseteil 160, die zwischen sich einen Aufnahmeraum, insbesondere für eine in Richtung der Achse A verlaufende Spindelmutter 105 und eine senkrecht zur Achse A verlaufende Schnecke 107 definieren. Die Gehäuseteile 150, 160 liegen in radialer, aufeinander zu orientierter Richtung mit komplementären, gestuften Anlageflächen 151, 161 aneinander an und umschließen die Achse A. In axialer Richtung sind die beiden Gehäuseteile 150, 160 durch Stufen in den gestuften Anlageflächen 151, 161 zueinander fixiert. In radialer, voneinander weg orientierter Richtung, sind die beiden Gehäuseteile 150, 160 im Gegensatz zu dem zuvor beschriebenen Getriebegehäuse des Standes der Technik jedoch nicht miteinander verschraubt, sondern durch zwei Federklammern 180 zueinander fixiert. Die beiden Federklammern 180 fixieren die Gehäuseteile 150, 160 in einer senkrecht zu den Anlageflächen 151, 161 orientierten Richtung.

Das erste Gehäuseteil 150 weist an seinen beiden in axialer Richtung gegenüberliegenden Enden jeweils ein im Wesentlichen halbkreisförmiges erstes Zylindersegment 155 auf. Auch das zweite Gehäuseteil 160 weist an seinen beiden in axialer Richtung gegenüberliegenden Enden jeweils ein im Wesentlichen halbkreisförmiges zweites Zylindersegment 165 auf. An den in Umfangsrichtung betrachtet beiden Enden des ersten Zylindersegments 155 steht in radialer Richtung jeweils ein erster Nocken 156 ab. An den in Umfangsrichtung betrachtet beiden Enden des zweiten Zylindersegments 165 steht in radialer Richtung jeweils ein zweiter Nocken 166 ab.

Jeweils ein erstes Zylindersegment 155 des ersten Gehäuseteils 150 und ein zweites Zylindersegment 165 des zweiten Gehäuseteils 160 bilden paarweise aneinander anliegend einen Zylinderabschnitt 170, durch den die Spindel 4 hindurchgeführt werden kann. Die Zylindermittelachsen der beiden Zylinderabschnitte 170 fluchten mit der Achse A. Das Getriebegehäuse 140 und damit auch die Zylinderabschnitte 170 sind weitgehend spiegelsymmetrisch zu einer senkrecht zur Achse A verlaufenden Symmetrieebene. In jedem der beiden Zylinderabschnitte 170 ist zudem die Spindelmutter 105 gelagert, vorzugsweise unter Zwischenlage jeweils einer Lagerbuchse.

Jeder der beiden Zylinderabschnitte 170 bildet jeweils einen in Richtung der Achse A nach außen vom Getriebegehäuse 140 abstehenden Absatz 170.

Jeweils ein erster Nocken 156 und ein zweiter Nocken 166 liegen aneinander an und bilden gemeinsam einen in radialer Richtung vom Zylinderabschnitt 170 abstehenden Nockenbereich. Von jedem Zylinderabschnitt 170 stehen zwei Nockenbereiche diametral gegenüberliegend in radialer Richtung ab. Die Nockenbereiche sind annähernd quaderförmig ausgebildet.

Das erste Zylindersegment 155 weist eine erste Vertiefung 158 auf, die in einem der Mitte des Getriebegehäuses 140 zugewandten Bereich des ersten Zylindersegments 155 angeordnet ist. Das zweite Zylindersegment 165 weist eine zweite Vertiefung 168 auf, die in einem der Mitte des Getriebegehäuses 140 zugewandten Bereich des zweiten Zylindersegments 165 angeordnet ist. Die beiden Vertiefungen 158, 168 liegen einander gegenüber und bilden in einer senkrecht zur Achse A verlaufenden Ebene gemeinsam einen vierkantförmigen Hinterschnitt in dem Zylinderabschnitt 170. In axialer Richtung sind die beiden Vertiefungen 158, 168 jeweils durch zwei seitliche Flächen begrenzt, die senkrecht zur Achse A verlaufen und parallel zueinander um eine Breite der Vertiefung beabstandet sind Die Breite der Vertiefung in axialer Richtung entspricht annähernd der Materialdicke der Federklammer 180.

Die beiden Federklammern 180 sind als Gleichteile oder spiegelsymmetrische Teile gestaltet, so dass nachfolgend nur eine der beiden Federklammern 180 beschrieben ist.

Die Federklammer 180 hat eine flache U-förmige Grundform. Vorliegend ist die Federklammer 180 aus einem Federblech ausgestanzt, könnte jedoch auch aus einem anderen Werkstoff oder einem Federdraht gefertigt sein. Zwei Federschenkel 181 sind mittels eines Stegs 182 miteinander verbunden.

Die sich gegenüberliegenden Seiten der beiden Federschenkel 181 sind konturiert ausgebildet. Die beiden Federschenkel 181 sind spiegelsymmetrisch zueinander, und zwar zu einer Symmetrieebene, die senkrecht durch den Steg 182 verläuft. In einem dem Steg 182 benachbarten ersten Bereich 181a verlaufen die inneren Konturen der beiden Federschenkel 181 zunächst parallel zueinander. In einem an den ersten Bereich 181a anschließenden zweiten Bereich 181b sind die beiden Federschenkel 181 jeweils bogenförmig gestaltet, so dass die lichte Weite zwischen den Federschenkeln 181 in dem zweiten Bereich 181b zunimmt. In einem an den zweiten Bereich 181b anschließenden dritten Bereich 181c verlaufen die inneren Konturen der beiden Federschenkel 181 wieder parallel zueinander, jedoch mit einem größeren Abstand als im ersten Bereich 181a. In einem an den dritten Bereich 181c anschließenden vierten Bereich 181d weist jeder der beiden Federschenkel 181 eine Nase 188 auf. Die beiden Nasen 188 sind aufeinander zu orientiert. Der Abstand der beiden Nasen 188 ist geringer als die lichte Weite zwischen den beiden Federschenkel 181 in dem dritten Bereich 181c.

Die beiden Federklammern 180 fixieren die Gehäuseteile 150, 160 zueinander. Nachfolgend ist die Fixierung durch eine der beiden Federklammern 180 beschrieben. Die zusätzliche Fixierung durch die zweite Federklammer 180 erfolgt auf gleiche Weise.

Indem einer der beiden Federschenkel 181 in die erste Vertiefung 158 und der andere der beiden Federschenkel 181 in die zweite Vertiefung 168 eingreift und die Federklammer 180 dadurch den Zylinderabschnitt 170 umgreift, können sich die beiden Gehäuseteile 150, 160 nicht voneinander weg bewegen.

Bei der Montage des Getriebegehäuses 140 werden die Federklammern 180 auf die Zylinderabschnitte 170 aufgeschoben. Die Fügerichtung ist in Figur 3 durch zwei Pfeile dargestellt. Durch das Aufschieben der Federklammern 180 auf die Zylinderabschnitte 170 werden die beiden Federschenkel 181 zunächst etwas voneinander weg gefedert. Die beiden Nasen 188 laufen dabei über den Boden der Vertiefungen 158, 168, bis sich die Nasen 188 nach dem Durchlaufen der Vertiefungen 158, 168 wieder aufeinander zu bewegen können. Die beiden Nasen 188 hintergreifen dann den in Fügerichtung hinter den Vertiefungen 158, 168 gelegenen Bereich der Zylinderabschnitte 170.

Im montierten Zustand des Getriebegehäuses 140, das heißt nach dem Aufschieben der beiden Federklammern 180 liegt einer der beiden aus erstem Nocken 156 und zweitem Nocken 166 gebildeten, quaderförmigen Nockenbereiche formschlüssig zwischen den beiden ersten Bereichen 181a der Federklammer 180, so dass sich die Federklammer 180 nicht um den zugehörigen Zylinderabschnitt 170 drehen kann. Die beiden dritten Bereiche 181c der Federschenkel 181 liegen in radialer Richtung jeweils am Boden einer der Vertiefungen 158, 168 an. In axialer Richtung liegen die beiden dritten Bereiche 181c der Federschenkel 181 jeweils zwischen den zwei beiden seitliche Flächen einer der beiden Vertiefungen 158, 168.

### Bezugszeichenliste

- 1,100: Verstellgetriebe
- 2: Spindelhalter
- 3: Gewinde
- 4: Spindel
- 5, 105: Spindelmutter
- 6: Schrägverzahnung
- 7, 107: Schnecke
- 7a: Rotationsachse
- 8: Schenkel
- 9: Haltebügel
- 10: Befestigungsschenkel
- 12: Dämpfer
- 26: Lagerbuchse
- 27: Lagerbuchse
- 44: Schraube
- 50, 150: erstes Gehäuseteil
- 60, 160: zweites Gehäuseteil
- 140: Getriebegehäuse
- 151: erste Anlagefläche
- 155: erstes Zylindersegment
- 156: erster Nocken, Nockenbereich
- 158: erste Vertiefung
- 161: zweite Anlagefläche
- 165: zweites Zylindersegment
- 166: zweiter Nocken, Nockenbereich
- 168: zweite Vertiefung
- 170: Absatz, Zylinderabschnitt
- 180: Federklammer
- 181: Federschenkel
- 181a: erster Bereich
- 181b: zweiter Bereich
- 181c: dritter Bereich
- 181d: vierter Bereich
- 182: Steg
- 188: Nase
- A: Achse

## Patentansprüche

1. Getriebegehäuse (140) für ein Verstellgetriebe (100) eines Fahrzeugsitzes mit einem ersten Gehäuseteil (150) und einem zweiten Gehäuseteil (160), wobei ein erstes Zylindersegment (155) des ersten Gehäuseteils (150) und ein zweites Zylindersegment (165) des zweiten Gehäuseteils (160) paarweise aneinander anliegend einen Zylinderabschnitt (170) bilden, durch den eine sich in Richtung einer Achse (A) erstreckende Spindel (4) hindurchführbar ist,
**dadurch gekennzeichnet, dass**
die beiden Gehäuseteile (150, 160) mittels zweier Federklammern (180) in radial zu der Achse (A), voneinander weg orientierter Richtung zueinander fixiert sind, und mindestens eine der zwei Federklammern (180) zwei Federschenkel (181) aufweist, die mittels eines Stegs (182) miteinander verbunden sind, wobei die beiden Federschenkel (181) einen Nockenbereich (156, 166) zwischen sich aufnehmen und der Nockenbereich (156, 166) eine Verdrehung der Federklammer (180) um die Achse (A) verhindert.

2. Getriebegehäuse (140) nach Anspruch 1, **dadurch gekennzeichnet, dass** das Getriebegehäuse (140) einen Aufnahmeraum für eine um eine Achse (A) drehbare Spindelmutter (105) und eine die Spindelmutter (105) antreibende Schnecke (107) bildet.

3. Getriebegehäuse (140) nach einem der Ansprüche 1 oder 2, **dadurch gekennzeichnet, dass** mindestens eine der zwei Federklammern (180) aus einem Federblech ausgestanzt ist.

4. Getriebegehäuse (140) nach einem der Ansprüche 1 oder 2, **dadurch gekennzeichnet, dass** mindestens eine der zwei Federklammern (180) aus einem Federdraht gefertigt ist.

5. Getriebegehäuse (140) nach einem der Ansprüche 1 bis 4, **dadurch gekennzeichnet, dass** mindestens eine der zwei Federklammern (180) eine flache U-förmige Grundform aufweist.

6. Getriebegehäuse (140) nach einem der Ansprüche 1 bis 4, **dadurch gekennzeichnet, dass** mindestens eine der zwei Federklammern (180) eine gewölbte Form aufweist.

7. Getriebegehäuse (140) nach Anspruche 6, **dadurch gekennzeichnet, dass** mindestens eine der zwei Federklammern (180) eine Wellenform aufweist.

8. Getriebegehäuse (140) nach einem der Ansprüche 1 bis 7, **dadurch gekennzeichnet, dass** die beiden Federschenkel (181) spiegelsymmetrisch zueinander ausgebildet sind.

9. Getriebegehäuse (140) nach Anspruch 1 bis 8, **dadurch gekennzeichnet, dass** mindestens einer der beiden Federschenkel (181) an einem von dem Steg (182) abgewandten Ende eine Nase (188) aufweist, die die Federklammer (180) entgegen einer Fügerichtung der Federklammer (180) fixiert.

10. Getriebegehäuse (140) nach einem der Ansprüche 1 bis 9, **dadurch gekennzeichnet, dass** die beiden Federschenkel (181) in Vertiefungen (158, 168) des Zylinderabschnitts (170) eingreifen.

11. Getriebegehäuse (140) nach einem der Ansprüche 1 bis 10, **dadurch gekennzeichnet, dass** der erste Nocken (156) und/oder der zweite Nocken (166) als Anschlag in Fügerichtung zwischen der Federklammer (180) und dem Getriebegehäuse (140) dient.

12. Getriebegehäuse (140) nach Anspruch 11, **dadurch gekennzeichnet, dass** ein radial äußerer Bereich des ersten Nockens (156) und/oder des zweiten Nockens (166) an dem Steg (182) der Federklammer (180) anliegt.

## Claims

1. Mechanism housing (140) for an adjustment mechanism (100) for a vehicle seat, having a first housing part (150) and a second housing part (160), wherein a first cylindrical segment (155) of the first housing part (150) and a second cylindrical segment (165) of the second housing part (160) rest against one another as a pair to form a cylindrical portion (170) through which a spindle (4) extending in the direction of an axis (A) can be passed,
**characterized in that**,
in the radial direction relative to the axis (A), facing away from each other, the two housing parts (150, 160) are fixed relative to one another by means of two spring clips (180), and at least one of the two spring clips (180) has two spring legs (181) that are connected to one another by a web (182), wherein the two spring legs (181) enclose between them a boss region (156, 166) and the boss region (156, 166) prevents twisting of the spring clip (180) about the axis (A).

2. Mechanism housing (140) according to Claim 1, **characterized in that** the mechanism housing (140) forms an accommodation space for a spindle nut (105), which can be rotated about an axis (A), and a worm (107), which drives the spindle nut (105).

3. Mechanism housing (140) according to either of Claims 1 and 2, **characterized in that** at least one of the two spring clips (180) is punched out of a spring sheet.

4. Mechanism housing (140) according to either of Claims 1 and 2, **characterized in that** at least one of the two spring clips (180) is manufactured from a spring wire.

5. Mechanism housing (140) according to one of Claims 1 to 4, **characterized in that** at least one of the two spring clips (180) has a flat U-shaped basic shape.

6. Mechanism housing (140) according to one of Claims 1 to 4, **characterized in that** at least one of the two spring clips (180) has an arched shape.

7. Mechanism housing (140) according to Claim 6, **characterized in that** at least one of the two spring clips (180) has a wave shape.

8. Mechanism housing (140) according to one of Claims 1 to 7, **characterized in that** the two spring legs (181) are formed in mirror symmetry with respect to one another.

9. Mechanism housing (140) according to Claims 1 to 8, **characterized in that** at least one of the two spring legs (181) has a nose (188) on an end remote from the web (182), said nose fixing the spring clip (180) counter to a fitting direction of the spring clip (180).

10. Mechanism housing (140) according to one of Claims 1 to 9, **characterized in that** the two spring legs (181) engage in depressions (158, 168) in the cylindrical portion (170).

11. Mechanism housing (140) according to one of Claims 1 to 10, **characterized in that** the first boss (156) and/or the second boss (166) serve/serves as a stop in the fitting direction between the spring clip (180) and the mechanism housing (140).

12. Mechanism housing (140) according to Claim 11, **characterized in that** a radially outer region of the first boss (156) and/or of the second boss (166) rests on the web (182) of the spring clip (180) .

## Revendications

1. Boîtier de transmission (140) pour un mécanisme de réglage (100) d'un siège de véhicule, comprenant une première partie de boîtier (150) et une deuxième partie de boîtier (160), un premier segment de cylindre (155) de la première partie de boîtier (150) et un deuxième segment de cylindre (165) de la deuxième partie de boîtier (160) formant, en s'appliquant l'un contre l'autre de manière appariée, une portion de cylindre (170) à travers laquelle peut être guidée une broche (4) s'étendant dans la direction d'un axe (A),
**caractérisé en ce que**
les deux parties de boîtier (150, 160) sont fixées l'une par rapport à l'autre au moyen de deux pinces à ressort (180) dans la direction orientée à l'écart l'une de l'autre radialement par rapport à l'axe (A), et au moins l'une des deux pinces à ressort (180) présentant deux branches de ressort (181) qui sont connectées l'une à l'autre au moyen d'une nervure (182), les deux branches de ressort (181) recevant entre elles une région de came (156, 166) et la région de came (156, 166) empêchant une rotation de la pince à ressort (180) autour de l'axe (A).

2. Boîtier de transmission (140) selon la revendication 1, **caractérisé en ce que** le boîtier de transmission (140) forme un logement de réception pour un écrou de broche (105) pouvant tourner autour d'un axe (A) et pour une vis sans fin (107) entraînant l'écrou de broche (105).

3. Boîtier de transmission (140) selon l'une quelconque des revendications 1 et 2, **caractérisé en ce qu'**au moins l'une des deux pinces à ressort (180) est découpée dans une tôle à ressort.

4. Boîtier de transmission (140) selon l'une quelconque des revendications 1 et 2, **caractérisé en ce qu'**au moins l'une des deux pinces à ressort (180) est fabriquée à partir d'un fil d'acier à ressort.

5. Boîtier de transmission (140) selon l'une quelconque des revendications 1 à 4, **caractérisé en ce qu'**au moins l'une des deux pinces à ressort (180) présente une forme de base plate en forme de U.

6. Boîtier de transmission (140) selon l'une quelconque des revendications 1 à 4, **caractérisé en ce qu'**au moins l'une des deux pinces à ressort (180) présente une forme courbe.

7. Boîtier de transmission (140) selon la revendication 6, **caractérisé en ce qu'**au moins l'une des deux pinces à ressort (180) présente une forme ondulée.

8. Boîtier de transmission (140) selon l'une quelconque des revendications 1 à 7, **caractérisé en ce que** les deux branches de ressort (181) sont réalisées avec une symétrie spéculaire l'une par rapport à l'autre.

9. Boîtier de transmission (140) selon la revendication 1 à 8, **caractérisé en ce qu'**au moins l'une des deux branches de ressort (181) présente, au niveau d'une extrémité opposée à la nervure (182), un ergot (188) qui fixe les pinces à ressort (180) à l'encontre d'une direction d'assemblage des pinces à ressort (180).

10. Boîtier de transmission (140) selon l'une quelconque des revendications 1 à 9, **caractérisé en ce que** les deux branches de ressort (181) s'engagent dans des renfoncements (158, 168) de la portion de cylindre (170).

11. Boîtier de transmission (140) selon l'une quelconque des revendications 1 à 10, **caractérisé en ce que** la première came (156) et/ou la deuxième came (166) servent de butée dans la direction d'assemblage entre la pince à ressort (180) et le boîtier de transmission (140).

12. Boîtier de transmission (140) selon la revendication 11, **caractérisé en ce qu'**une région radialement extérieure de la première came (156) et/ou de la deuxième came (166) s'applique contre la nervure (182) de la pince à ressort (180).
